# EUROPEAN PATENT APPLICATION

(11) **EP 0 940 766 A2**
(43) Date of publication of application: **08.09.1999**
(21) Application number: 99301502.3
(22) Date of filing: 01.03.1999
(51) Int. Cl.: G06K 13/08

(54) **Card cleaning apparatus and method**

(30) Priority: 06.03.1998 JP 7355698
(71) Applicant: CANON KABUSHIKI KAISHA, Tokyo (JP)
(72) Inventor: Saito, Makoto, Ohta-ku, Tokyo (JP)
(74) Representative: Beresford, Keith Denis Lewis

(57) **Abstract**

A cleaning apparatus is described which automatically carries out cleaning of a recording card (C). The length of the circumference of the surface of a cleaning roller (11) is not more than a length of the card (C). The pressure exerted by the cleaning roller (11) on the surface of the card (C) is more than 1N.

## Description

### BACKGROUND OF THE INVENTION

### 1. FIELD OF THE INVENTION

This invention relates to an apparatus and method for cleaning a surface of an optical or a magnetical information recording card used for recording and/or reproducing information.

### 2. RELATED BACKGROUND ART

An optical card information recording and/or reproducing apparatus usually has built-in a cleaning system for cleaning dirt on the card surface because of the bad influence of dirt adhered to a card surface on recording and/or reproducing.

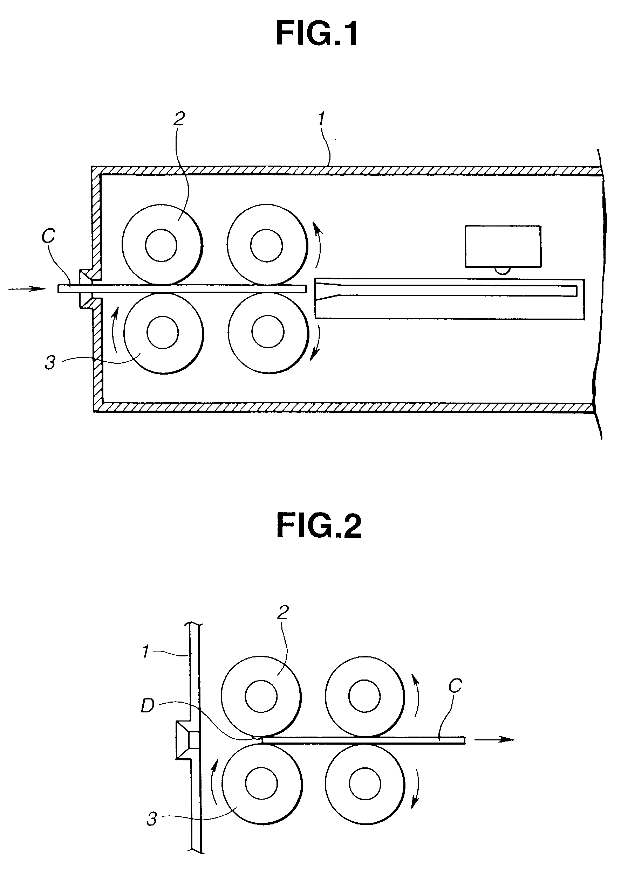

Figure 1 shows a sectional view of a conventional optical card information recording and/or reproducing apparatus. A pair of cleaning rollers 2 and a pair of conveyor rollers 3 are provided in the information recording and/or reproducing apparatus 1. When a card C is inserted into the apparatus, the cleaning roller 2 stops rotating and the conveyor roller 3 rotates in the direction of insertion of the card C. When the card C is discharged from the apparatus 1, the cleaning roller 2 and the conveyor roller 3 rotate in the direction of discharge of the card C.

Figures 2-4 illustrate the processes of insertion and discharge of the card C. When the card C is inserted in the apparatus 1, the card C is conveyed until the card C is between the cleaning roller 2 and conveyor roller 3. As shown in Figure 2, the card C is then cleaned by the cleaning roller 2, the dirt D being gathered by the cleaning roller 2.

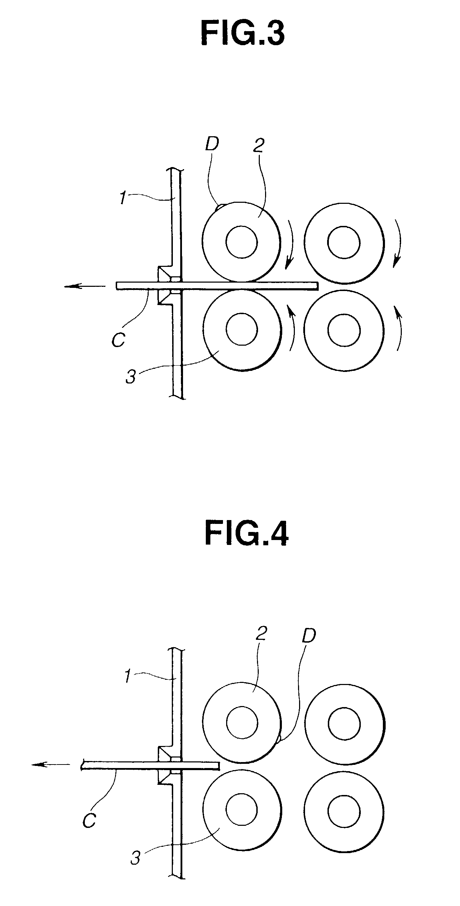

To discharge the card C from the apparatus, the cleaning roller 2 and conveyor roller 3 rotate in the discharging direction. As shown in Figures 3 and 4, the card C is then discharged from the apparatus 1. However, in the above conventional apparatus, after the surface of the card C is cleaned by the cleaning roller 2, the dirt D which is gathered by the cleaning roller 2, as shown in Figure 4, adheres on the cleaning roller 2 and is left in the apparatus 1 after the card C is discharged. When a vibration is given to the apparatus in that condition, the dirt D adhered to the cleaning roller 2 disperses inside the apparatus and it is possible that the dispersed dirt D exerts a bad influence upon recording and/or reproducing operations. Also if the dirt D is left on the cleaning roller 2, there is the problem that the dirt D adhering to the cleaning roller 2 is difficult to remove.

Alternatively, the dirt D, which is gathered at each cleaning operation,may pile up and the cleaning performance declines and reduces the lifetime of the cleaning parts.

### SUMMARY OF THE INVENTION

It is an object of this invention to at least alleviate the above problems. In particular, an object is to supply a cleaning apparatus which may automatically carry out cleaning of the card without reducing the cleaning performance, and which may improve the lifetime of the cleaning parts.

According to the present invention there is provided a cleaning apparatus or method in which the length of the circumference of the surface of the cleaning roller and the pressure of the cleaning roller to the surface of the card are controlled.

### BRIEF DESCRIPTION OF THE DRAWINGS

An embodiment of the invention will now be described, by way of example only, with reference to the accompanying drawings in which:
Figure 1 shows a schematic sectional view of a conventional cleaning apparatus;
Figure 2 illustrates the insertion of the card in the apparatus of Figure 1;
Figure 3 illustrates the discharge of the card from the apparatus of Figure 1;
Figure 4 illustrates the card totally discharged from the apparatus of Figure 1;
Figure 5 shows a sectional view of an embodiment of the cleaning apparatus of an embodiment of the present invention;
Figure 6 illustrates the start of insertion of a card into the apparatus of Figure 5;
Figure 7 illustrates the card passing a cleaning roller;
Figure 8 illustrates the card starting to discharge;
Figure 9 illustrates the card in the process of discharging; and
Figure 10 illustrates the finish of discharge of the card.

### DETAILED DESCRIPTION OF THE PREFERRED EMBODIMENT

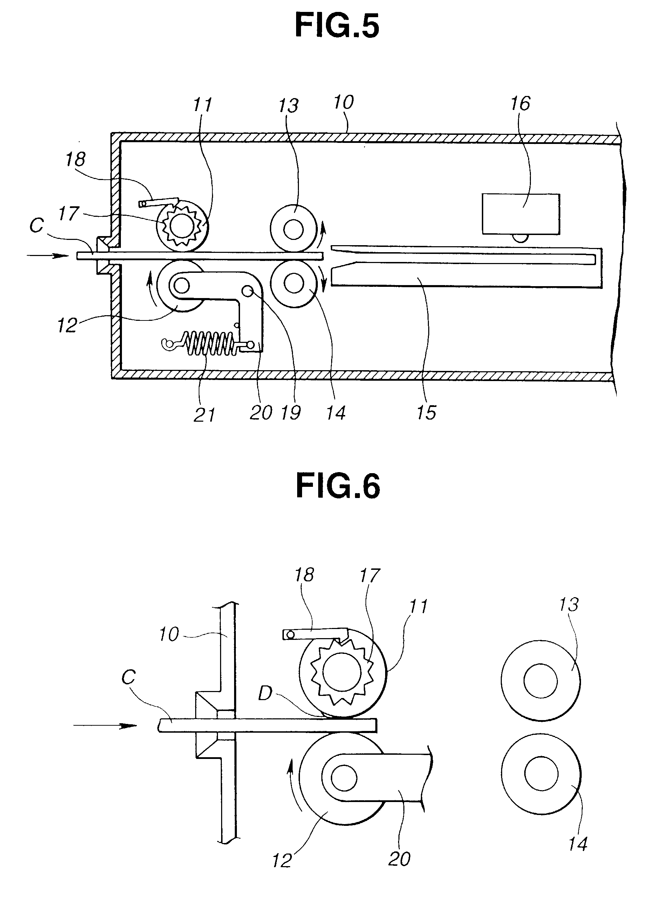

An embodiment of the present invention is now explained with reference to the drawings. As shown in Figure 5, in the optical card information recording and/or reproducing apparatus 10, the cleaning roller 11 is arranged near the opening for inserting the card C, a conveyor roller 12 being arranged so as to oppose the cleaning roller 11. Further conveyor rollers 13 and 14 are arranged opposing each other at the back of the cleaning roller 11 and the first conveyor roller 12. A tray 15 for carrying the card C is arranged at the back of the conveyor rollers 13 and 14, with the optical head 16 being arranged above the tray 15.

A ratchet gear 17 is fixed on the axis of rotation of the cleaning roller 11, with a ratchet nail 18 being arranged to stop the rotation of the cleaning roller 11 by biting onto the ratchet gear 17. The end of an L-shaped conveyor lever 20 which is rotationally supported by a lever pin 19, is fixed on the axis of rotation of the conveyor roller 12. The other end of the conveyor lever 20 is connected with a spring 21 which biases the position of the conveyor roller 12 towards the cleaning roller 11. The pressure of the cleaning roller 11 on the surface of the card is set by adjusting the power of the spring 21, the effect of the pressure being described in more detail later.

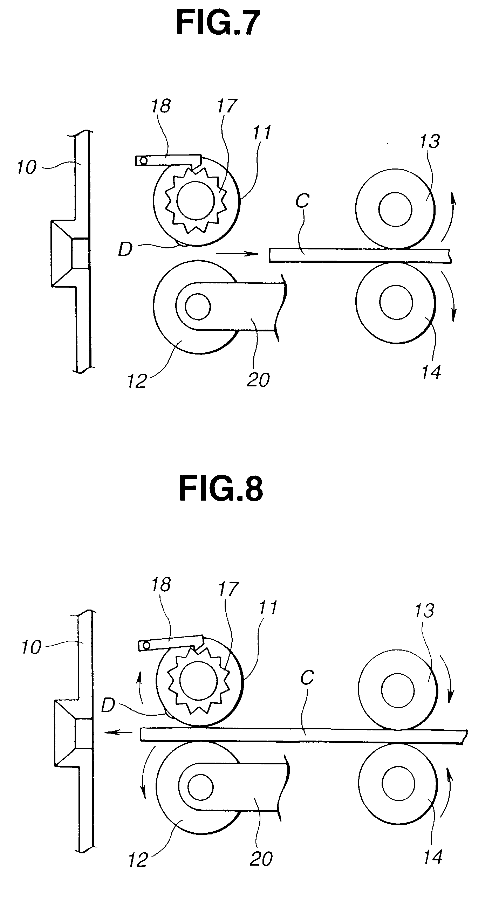

Figure 6 and Figure 7 shows the insertion operation of the card C. As shown in Figure 6, when the card C is inserted in the opening in the optical card information recording and/or reproducing apparatus, the card C passes between the cleaning roller 11 and the conveyor roller 12. The ratchet gear is then stopped by the ratchet nail 18 and the rotation of the cleaning roller 11 stops.

As a result, the surface of the card C slides past the cleaning roller 11 and so is cleaned. As the same time, the conveyor roller 12 rotates in the same direction as the insertion direction of the card C and conveys the card C towards the back of the apparatus 10.

As shown in Figure 6, when the card C finishes passing between the cleaning roller 11 and the conveyor roller 12, the dirt D on the surface of the card C accumulates on the cleaning roller 11. After this, the card C is positioned on the tray 15 by the conveyor rollers 13 and 14. The optical head 16 is then effective to record and/or reproduce the information on/from the card C while the tray 15 produces a reciprocating motion of the card C relative to the head 16.

After the recording and/or reproducing operation of the card C has finished, the card C is discharged from the apparatus 10.

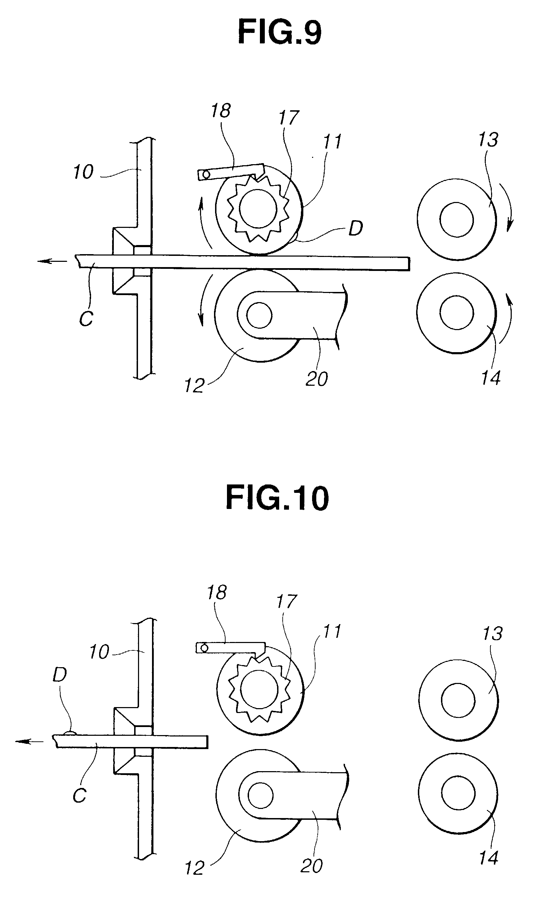

Figure 8 and Figure 9 show the discharging operation of the card C. The card C is removed from the tray 15 and conveyed toward the cleaning roller 11 by the conveyor roller 13 and 14 rotating in the discharging direction. By this time, the ratchet nail 18 will dislocate from the ratchet gear 17 and the rotation of the cleaning roller 11 becomes free. The card C is conveyed towards the opening in the apparatus 10 by the rotation of the conveyor roller 12 in the discharging direction of the card C, while the card C is pressed under a predetermined pressure between the cleaning roller 11 and the conveyor roller 12.

The length of the circumference of the cleaning surface of the cleaning roller 11 is set at not more than the length of the card C in the discharging direction. When the card C passes the cleaning roller 11, the dirt D gathered on the cleaning roller 11 is transferred to the surface of the card C by the action of the predetermined pressure to the surface of the card C between the cleaning roller 11 and the conveyor roller 12. The card C is then discharged out of the apparatus 10.

When the card C is discharged, the frequency at which the dirt D gathered on the cleaning roller 11 is transferred to the surface of the card C, when the length of the circumference of the cleaning roller 11 is equal to the length of the card C, is once. When it is one-half times as long as the length of the card C, it is twice. In general, the bigger the ratio of the length of the card C to the circumference of the cleaning roller 11, the greater the frequency of the transfer of dirt during the discharge of the card C.

Table 1 shows experimental data showing the degree of dirt D transfer to the surface of the card C from the cleaning roller 11 when the card C is discharged. The horizontal axis shows the pressure which acts on the surface of the card C between the cleaning roller 11 and conveyor roller 12 in units of Newtons. The vertical axis shows the length of the circumference of the cleaning surface of the cleaning roller 11 as a multiple of the length of the card C.

When the amount of dirt D which is transferred to the surface of the card C from the cleaning roller 11 is 70% or more, this is indicated by ⓞ; 50% or more and less than 70% is indicated by ○; and less than 50% is indicated by X.

**TABLE 1**

| | PRESSURE | | | | | | | |
|---|---|---|---|---|---|---|---|---|
| | 0.6 | 0.8 | 1 | 2 | 3 | 4 | 5 | 6 |
| LENGTH OF THE CIRCUMFERENCE | | | | | | | | |
| the length of the card C*1 | X | X | ○ | ○ | ○ | ○ | ○ | ○ |
| the length of the card C*1/2 | X | X | ⓞ | ⓞ | ⓞ | ⓞ | ⓞ | ⓞ |
| the length of the card C*1/4 | X | X | ⓞ | ⓞ | ⓞ | ⓞ | ⓞ | ⓞ |
| the length of the card C*1/6 | X | ○ | ⓞ | ⓞ | ⓞ | ⓞ | ⓞ | ⓞ |
| the length of the card c*1/8 | X | ○ | ⓞ | ⓞ | ⓞ | ⓞ | ⓞ | ⓞ |

The following can be understood from this experimental data:

When the length of the circumference of the cleaning roller 11 is equal to the length of the card C and the pressure is 1N or more, the dirt D transferred from the cleaning roller 11 to the surface of the card C is more than 50%.

Also when the length of the circumference of the cleaning roller 11 is equal to the length of the card C and the pressure is less than 1N, the dirt D transferred from the cleaning roller 11 to the surface of the card C is less than 50%.

The result can be seen, when the pressure is small, the transferred amount of the dirt D is small. Also when the length of the circumference of the cleaning roller is not more than one half the length of the card C and the pressure is more than 1N, the dirt D transferred to the surface of the card C is more than 70%.

Thus the transfer efficiency increases in comparison to when the length of the circumference of the cleaning roller 11 is the same as the length of the card C. This is because the dirt transfer time increases where the length of the circumference of the cleaning roller 11 is shorter than the card. It can be understood from the results of the above experiment that the pressure to the surface of the card C must be more than 1N and the length of the circumference of the cleaning roller 11 must be not more than the length of the card C, in order to transfer the dirt D efficiently.

Further, for increasing the dirt transfer ratio it is helpful that the pressure on the surface of the card C is more than 1N and the length of the circumference of the cleaning roller 11 is not more than one-half the length of the card C.

Table 2 shows the length of the circumference of the cleaning roller 11 as the horizontal axis and the lifetime of the card as the vertical axis. Table 2 also shows experimental data showing the cleaning performance as a function of the relationship between the length of the circumference of the cleaning roller 11 and the lifetime. The lifetime is the number of times a card C having the dirt on its surface is cleaned by the cleaning roller 11 in the apparatus 10 has acceptable recording/reproducing characteristics.

To test the durability, the card C is inserted in the apparatus such that the dirt D is cleaned by the cleaning roller 11 a predetermined number of times. If it is then possible to record and/or reproduce from the card more than 99%, this is shown by ○. If it is impossible to record and/or reproduce more than 99%, this is shown by X.

**TABLE 2**

| | NUMBER OF CARD PASSES | |
|---|---|---|
| | 1,000 | 10,000 |
| THE LENGTH OF THE CIRCUMFERENCE | | |
| the length of the card C*1 | ○ | ○ |
| the length of the card C*1/2 | ○ | ○ |
| the length of the card C*1/4 | ○ | ○ |
| the length of the card C*1/6 | ○ | ○ |
| the length of the card C*1/7 | ○ | X |
| the length of the card C*1/8 | X | X |

As can be understood from this experimental data, when the length of the circumference of the cleaning surface of the cleaning roller 11 is more than one-sixth of the length of the card C, it is possible for the lifetime to reach 10,000 passes. If the length of the circumference of the cleaning surface of the cleaning roller 11 is not more than one-seventh times the length of the card C, the lifetime does not reach 10,000 passes.

The shorter the length of the circumference of the cleaning roller 11, the number of times during which the dirt D transfers to the card C during each pass increases. However, as the cleaning roller 11 rotates each time the card C discharges, and the cleaning position on the cleaning roller 11 changes at each time of insertion of the card C, the shorter the length of the circumference of the cleaning surface of the cleaning roller 11, the number of times at which the card is cleaned at the same cleaning position increases and thus the lifetime decreases.

Accordingly, as the tentative endurance limit of the cleaning roller 11 is 10,000 times, it is expedient that the length of the circumference of the cleaning roller 11 is set one-sixth time the length of the card C.

Table 3 shows experimental data showing the relationships between the conveyance time of card C in the apparatus 10 and the pressure on the surface of the card C. The conveyance time of the card C is measured from the time at which the card C is inserted into the opening to the time at which the card C is positioned on the tray 15. When this time is within 1 second, this is indicated by ○; when this time exceeds the 1 second, this is indicated by X.

**TABLE 3**

| | PRESSURE (N) | | | | | | | | | |
|---|---|---|---|---|---|---|---|---|---|---|
| | 0.4 | 0.6 | 0.8 | 1 | 2 | 3 | 4 | 5 | 6 | 7 |
| CONVEYANCE TIME | X | X | ○ | ○ | ○ | ○ | ○ | ○ | X | X |

As can be understood from the experimental data, when the pressure is small, the conveyance time is longer because of slippage between the conveyor roller 12 and the card C. As the permissible range of the conveyor time of the card C is within 1 second, it is expedient that the pressure is between about 1 to 5N.

It will be appreciated that when the card C is discharged, the dirt D which is gathered on the cleaning roller 11 is discharged with the card C outside of the apparatus 10.

As a result the dirt D is not heaped up on the cleaning roller 11, the cleaning performance does not deteriorate, is kept the same condition and the endurance of the cleaning parts increases.

The above described embodiment refers to the cleaning of an optical card. However, the invention also relates to the cleaning of a magnetic card. It will be appreciated that by a recording and/or reproducing apparatus is meant an apparatus that performs at least one of the functions of recording information on, and reproducing information from a recording medium.

## Claims

1. A cleaning apparatus for cleaning the surface of a recording card (C), comprising:
conveyor roller means for conveying the card (3, 12, 13, 14) in the apparatus;
a cleaning roller (11);
means (17, 18) for preventing rotation of the cleaning roller (11) during the insertion of the recording card such that the card (C) slides past the cleaning roller (11) at least during part of the insertion process, the cleaning roller being arranged to rotate in a discharging direction when the card is discharged from the apparatus; and
a pressing mechanism (12, 20, 21) for pressing the cleaning roller (11) on the surface of the card such that dirt from the cleaning roller (11) is transferred to the recording card (C) during discharge of the card (C) from the apparatus.

2. A cleaning apparatus according to claim 1, in which:
the length of the circumference of the surface of the cleaning roller (11) is not more than a length of the card in the discharging direction.

3. A cleaning apparatus according to claim 2, wherein the length of the circumference of the surface of the cleaning roller (11) is more than one-sixth times the length of the card C.

4. A cleaning apparatus according to any one of the preceding claims in which the pressure exerted by the pressing mechanism on the card is more than 1N.

5. A cleaning apparatus according to claim 4, wherein the pressure exerted on the card by the pressing mechanism is not more than 5N.

6. A cleaning apparatus according to any one of the preceding claims, wherein the card is an optical card.

7. A cleaning apparatus according to any one of claims 1 to 6, wherein the card is a magnetic card.

8. An apparatus for performing at least one of the functions of recording and reproducing information on or from a recording card including a cleaning apparatus according to any one of claims 1 to 7.

9. A cleaning method for cleaning the surface of a recording card (C) comprising the steps of:
inserting the card in a recording apparatus so as to provide a sliding motion of the card (C) against a cleaning roller (11);
discharging the card from the cleaning apparatus, causing the cleaning roller to exert a pressure on the card such that on insertion of the card at least part of the dirt carried by the card is transferred onto the cleaning roller (11),
and on discharge of the card, at least part of the dirt transferred to the cleaning roller is transferred back onto the card.

10. A cleaning method according to claim 9, in which:
the length of the circumference of the surface of the cleaning roller (11) is not more than a length of the card in the discharging direction.

11. A cleaning method according to claim 10, wherein the length of the circumference of the surface of the cleaning roller (11) is more than one-sixth times the length of the card C.

12. A cleaning apparatus according to any one of claims 9 to 11, in which the pressure exerted by the pressing mechanism on the card is more than 1N.

13. A cleaning method according to claim 12, wherein the pressure exerted on the card by the pressing mechanism is not more than 5N.

14. A cleaning method according to any one of claims 9 to 13, wherein the card is an optical card.

15. A cleaning method according to any one of claims 9 to 13, wherein the card is a magnetic card.

16. A method for performing at least one of the functions of recording and reproducing information on or from a recording card including a cleaning method according to any one of claims 9 to 15.
